# EUROPEAN PATENT SPECIFICATION

(11) **EP 3 282 833 B1**
(45) Date of publication and mention of the grant of the patent: **26.05.2021**
(21) Application number: 16780550.6
(22) Date of filing: 12.04.2016
(51) Int. Cl.: A01K 15/02

(54) **CAT SCRATCHER ATTRACTANT TOY**
KATZENKRATZBAUMLOCKMITTELSPIELZEUG
JOUET ATTRACTIF POUR CHAT ARBRE À GRIFFES

(30) Priority: 15.04.2015 US 201514687841
(43) Date of publication of application: 21.02.2018
(73) Proprietor: Worldwise, Inc., Novato, California 94949 (US)
(72) Inventor: FLOYD, Charles, Novato, California 94949 (US); PACULDO, Sara, Novato, California 94949 (US)
(74) Representative: Marks & Clerk France
(86) International application number: PCT/US2016/027081
(87) International publication number: WO 2016/168170

(56) References cited:
- US-A- 1 659 423
- US-A- 4 499 855
- US-A- 4 940 018
- US-A- 5 474 032
- US-A- 5 657 721
- US-A- 5 713 306
- US-A1- 2003 140 869
- US-A1- 2011 094 155
- US-A1- 2011 265 374
- US-A1- 2012 090 553
- US-B1- 6 345 593

## Description

### TECHNICAL FIELD

The present invention involves a cat scratching-based attractant and amusement device capable of encouraging a domestic cat to employ a dedicated scratching surface rather than scratching furniture, carpets and drapes and to maintain a cat's interest for prolonged periods of time in doing so.

### BACKGROUND OF THE INVENTION

It is well recognized that domestic cats crave scratching as part of their natural instinctive character. If a dedicated scratching surface is not provided, domestic cats will generally satisfy their need to scratch by turning to furniture, curtains and other articles which can be substantially damaged as a consequence. Often times, pet cats will not only climb over furniture, specifically upholster chairs and sofas, but will use such furniture and carpeting to condition their claws through deliberate repeated clawing, pulling and tearing actions specifically with their forepaws. As noted, this clawing activity appears to be an irresistible natural impulse for cats and can be the source of great aggravation to the pet owner.

There are a number of suppliers of pet and pet related products that have offered implements dedicated to alleviating the need of a cat to scratch. These include cat scratching posts and pads comprised of, for example, carpet, sisal, seagrass, rope and cardboard. In most instances, the cat scratching surface is simply made available to the cat relying upon the cat to seek it out on its own. To encourage cats to use a dedicated scratching surface, often times, a pet product manufacturer will infuse catnip or similar attractant into the body of the scratching surface. However, being merely a passive post or pad, cats will generally get bored and engage in destructive activity which could have been avoided if an attempt was made to actively attract a cat to the scratching surface and to keep it engaged with the scratcher by playing upon a cat's natural curiosity to seek out and swat objects as they would prey.

In addition to a cat's need to scratch, domestic cats also require stimulation. Without it, they get bored which could result in health problems and associated unwelcome antisocial behavior. It is also well known to anyone owning a pet cat that they possess a natural instinct to swat, pounce and attack dangling or moving attractants and can almost be mesmerized by them for long periods of time.

It is been well recognized that there is a need for a toy which could engage a cat with a movable attractant, such as a feathered bundle, to provide stimulation. For example, such a device is disclosed in U. S. Patent No. 6,892,675 causing an attractant to rotate at a fixed constant speed. However, devices such as those disclosed in the '675 patent are complex as they employ motors, sources to power the motors and housings to support them within the toys in order to create the desired movement of the attractant. Most of such devices employ batteries as power supplies and if the motor is not activated or if the batteries become exhausted, the attractant will not rotate but will simply be suspended from the end of a wand or tether creating little or no stimulation for the pet.

US5713306 (A) discloses an accessory for domestic cats that provides scratching, climbing, resting, playing, sleeping and observation facilities for the house kept cat that is designed and engineered as a "knockdown" assembly that can easily and readily be erected or disassembled. The main assembly is comprised of several sections and sizes of cylindrical shapes that are attached in-line end to end via internal fasteners that are threaded to prevent accidental separation. Once the sections are fully assembled a drop-in pressure maintaining device that is preassembled is installed at the top end together with a mobile multiple toy holder.

US2003140869 Describes an electric feline play center having a tunnel, sized for a cat to fit through, a scratching post with a hanging chew toy and an electronic ball tube wherein a fan blows colored balls around within a mesh tube, devised to occupy one or more cats without need of the pet owners direct presence.

It is thus an object to the present invention to provide a cat scratcher attractant device which will maintain a cat's interest for prolonged periods in the vicinity of the scratcher encouraging prolonged use of the scratcher to the exclusion of furniture, drapes and other household objects which would be damaged if the pet was to use them to satisfy its need to scratch.

It is yet a further object to the present invention to provide a cat scratcher attractant device which will maintain a cat's interest for prolonged periods of time in the vicinity of a scratcher encouraging prolonged use of the scratcher to the exclusion of furniture, drapes and other household objects without the need for a motorized power source.

These and further objects will be readily apparent when considering the following disclosure and appended claims.

### SUMMARY OF THE INVENTION

A cat scratcher attractant device comprising a substantially vertically extending cylindrical housing having a centrally located axis, said housing having an exterior surface supporting a cat scratcher and a cap positioned atop said housing having a geometric center coextensive with said centrally located axis, a rotatable spindle positioned atop said cap at said centrally located axis, first and second wands each having first and second ends, the first end of each wand being fixed to said spindle and the second end of each wand supporting an attractant, said wands being positioned on diametrically opposite sides of said spindle such that lateral force being applied to either wand will cause both wands to rotate, together with said spindle, about said centrally located axis The first and second wands are selectively removable from said rotatable spindle, and the cat scratcher comprises a plurality of pairs of first and second wands from which a pet owner may select, each said pair being of a different respective stiffness with a view to defining the arcs of curvature imposed upon them by the weight of attractants.

### BRIEF DESCRIPTION OF THE FIGURES

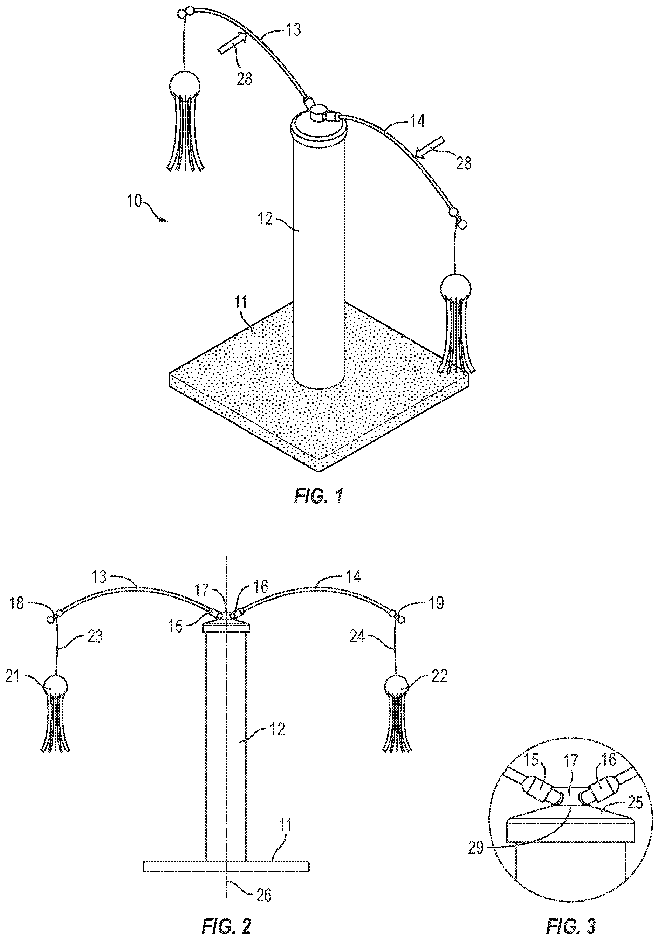

Fig. 1 is a perspective view of the cat scratcher attractant device of the present invention.
Fig. 2 is a side view of the cat scratcher attractant device of Fig. 1.
Fig. 3 is an enlarged view of the cap portion and related structure made part of the cat scratcher attractant device of the present invention.

### DETAILED DESCRIPTION OF THE INVENTION

Novel features which are characteristic of the invention, as to organization and method of operation, together with further objects and advantages thereof will be better understood from the following description considered in connection with the accompanying drawings, in which preferred embodiments of the invention are illustrated by way of example. It is to be expressly understood, however, that the drawings are for illustration description only and are not intended as definitions of the limits of the invention. The various features of novelty which characterize the invention are recited with particularity in the claims.

There has been broadly outlined more important features of the invention in the summary above and in order that the detailed description which follows may be better understood, and in order that the present contribution to the art may be appreciated. There are, of course, additional features of the invention that will be described hereinafter and which will form additional subject matter of the claims appended hereto. Those skilled in the art will appreciate that the conception upon which this disclosure is based readily may be utilized as a basis for the designing of other structures, methods and systems for carrying out the several purposes of the present invention. It is important therefore, that claims be regarded as including such equivalent constructions insofar as they do not depart from the spirit and scope of the present invention.

Certain terminology and the derivations thereof may be used in the following description for convenience and reference only, and will not be limiting. For example, words such as "upward," "downward," "left," and "right" refer to directions in the drawings to which reference is made unless otherwise stated. Similar words such as "inward" and "outward" refer to directions toward and away from, respectively, the geometric center of a device or area and designated parts thereof. Reference in the singular tense include the plural and vice versa, unless otherwise noted.

Cat scratcher attractant device 10 is illustrated having vertically extending axis 26 centered within housing 12. Housing 12 extends vertically and is cylindrical having its central axis coextensive with vertically extending axis 26. Housing 12, shown as extending vertically, is supported by a horizontally oriented platform 11 and thus is orthogonal thereto.

The exterior of housing 12 supports a cat scratching surface and, as a preferred embodiment, horizontally extending platform 11 can be provided with a cloth cover or additional cat scratching material to enhance the utility of the present invention as well as for aesthetic considerations.

Cat scratcher attractant device 10 further includes cap 25 positioned atop housing 12, the cap having geometric center 29 coextensive with centrally located axis 26. Rotatable spindle 17 is positioned atop cap 25 which is fixed to and supports wands 13 and 14 at their first ends 15 and 16, respectively.

In use, a pet will generally be attracted to attractants 21 and 22 located at the ends of wands 13 and 14 and will generally swat at the attractants by applying lateral force to either wand or attractant as a swatting action in the direction of arrow 28. This will cause wands 13 and 14 and their respective attractants 21 and 22 to rotate about centrally located axis 26 and the more that a cat is engaged with this cat scratcher attractant device by continuously attempting to scratch, paw and pounce on the attractants, the more of a spinning action will be induced causing the cat to become even more aggressively involved.

In order to enhance the life and flexibility the present invention, it is proposed that wands 13 and 14 at their first ends 15 and 16, respectively, be releasably connected to spindle 17 and that attractants 21 and 22 being connected directly to wands 13 and 14 at ends 18 and 19, or through the use of flexible tethers 23 and 24 be releasably connected to the wands at ends 18 and 19. Wands 13 and 14 can be frictionally and releasably connected to spindle 17 by a simple frictional connection, screw connection or snap fit connection. By replacing wands 13 and 14 as well as attractants 21 and 22, a pet owner can trade out these elements without having to replace the entire assembly, thus extending the life of the present toy indefinitely. Also, the pet owner could select from wands of different stiffness and thus modify their arcs of curvature imposed upon them by the weight of attractants 21 and 22. Furthermore, as attractants 21 and 22 become worn or are no longer of stimulating interest to the pet, they can replaced as desired by the pet owner.

It is further contemplated, as a preferred embodiment, that wands 13 and 14 be of equal length and that the weight of attractants 18 and 19 be substantially the same in order to enhance the stability of the present cat scratcher attractant device. As noted from the figures, wands 13 and 14 extend diametrically opposite one another emanating from spindle 17 which acts to stabilize housing 12 upon horizontally extending platform 11 which is an important feature of the present invention. As an engaging cat employs the present device, swatting and clawing can become vigorous and the diametrically opposite wands and attractants, again, help to stabilize the device and maintain the housing in a vertically extending operatal orientation.

In use, as spindle 17 rotates above horizontal platform 11, attractants 21 and 22 rotate proximate the exterior surface of housing 12. A cat's natural instinct to swat and pounce will result in the pet's attempt to get close to the attractants and, in doing so, will step onto horizontal platform 11 and in swiping at the attractants, will engage the exterior surface of housing 12. These activities will satisfy the cats need to scratch is well as its need to pursue prey. This combination of parts synergistically maintains a cat's interest and satisfies these multiple needs far longer than would be the case when either a scratcher alone or a rotating attractant alone is offered to a domestic cat.

Various modifications, alternative constructions, changes and equivalents will readily occur to those skilled in the art and may be employed as suitable without departing from the and scope of the invention. Such changes might involve alternative materials, components, structural arrangements, sizes, shapes, forms, functions, operational features or the like. Therefore, the above description and illustration should not be considered as limiting the scope of the invention, which is defined by the appended claims.

## Claims

1. A cat scratcher attractant device (10) comprising a substantially vertically extending cylindrical housing (12) having a centrally located axis (26), said housing having an exterior surface supporting a cat scratcher and a cap (25) positioned atop said housing having a geometric center (29) coextensive with said centrally located axis (26), a rotatable spindle (17) positioned atop said cap (25) at said centrally located axis (26), first and second wands (13,14) each having first and second ends, the first end of each wand being fixed to said spindle and the second end of each wand supporting an attractant (21, 22), said wands being positioned on diametrically opposite sides of said spindle such that lateral force being applied to either wand or attractant will cause both wands to rotate, together with said spindle, about said centrally located axis, said cat scratcher **characterized in that** said first and second wands are selectively removable from said rotatable spindle, and further **characterized by** comprising a plurality of pairs of first and second wands from which a pet owner may select, each said pair being of a different respective stiffness with a view to defining the arcs of curvature imposed upon them by the weight of attractants (21,22).

2. The cat scratcher attractant device of claim 1 in which said cylindrical housing is fixed to and supported by a substantially horizontally extending platform (11).

3. The cat scratcher attractant device of claim 2 wherein said horizontally extending platform is at least partially covered with a cat scratching surface.

4. The cat scratcher attractant device of claim 1 wherein said attractants are selectively removable from said wands.

5. The cat scratcher attractant device of claim 1 wherein said first and second wands are substantially of equal length to one another.

6. The cat scratcher attractant device of claim 5 wherein the attractants supported by said first and second wands are substantially of equal weight to one another.

## Patentansprüche

1. Katzenkratzer-Anlockvorrichtung (10), umfassend ein sich im Wesentlichen vertikal erstreckendes zylindrisches Gehäuse (12), das eine mittig angeordnete Achse (26) aufweist, wobei das Gehäuse eine Außenfläche, die einen Katzenkratzer trägt, und eine Kappe (25), die oben auf dem Gehäuse angeordnet ist, wobei sie eine geometrische Mitte (29) aufweist, die mit der mittig angeordneten Achse (26) zusammenfällt, aufweist, eine drehbare Spindel (17), die oben auf der Kappe (25) an der mittig angeordneten Achse (26) angeordnet ist, einen ersten und einen zweiten Stab (13, 14), die jeweils ein erstes und ein zweites Ende aufweisen, wobei das erste Ende jedes Stabes an der Spindel befestigt ist und das zweite Ende jedes Stabes ein Lockmittel (21, 22) trägt, wobei die Stäbe auf diametral gegenüberliegenden Seiten der Spindel derart angeordnet sind, dass eine seitliche Kraft die auf einen Stab oder ein Lockmittel ausgeübt wird, bewirken wird, dass sich beide Stäbe, zusammen mit der Spindel, um die mittig angeordnete Achse drehen, wobei der Katzenkratzer **dadurch gekennzeichnet ist, dass** der erste und der zweite Stab selektiv von der drehbaren Spindel abnehmbar sind, und ferner **dadurch gekennzeichnet ist, dass** er mehrere Paare von ersten und zweiten Stäben umfasst, aus denen ein Haustierbesitzer auswählen kann, wobei jedes Paar eine unterschiedliche jeweilige Steifigkeit aufweist, mit Blick auf das Definieren der Krümmungsbögen, die ihnen durch das Gewicht von Lockmitteln (21, 22) auferlegt werden.

2. Katzenkratzer-Anlockvorrichtung nach Anspruch 1, wobei das zylindrische Gehäuse an einer sich im Wesentlichen horizontal erstreckenden Plattform (11) befestigt ist und durch dieselbe getragen wird.

3. Katzenkratzer-Anlockvorrichtung nach Anspruch 2, wobei die sich horizontal erstreckende Plattform mindestens teilweise mit einer Katzenkratzoberfläche überzogen ist.

4. Katzenkratzer-Anlockvorrichtung nach Anspruch 1, wobei die Lockmittel selektiv von den Stäben abnehmbar sind.

5. Katzenkratzer-Anlockvorrichtung nach Anspruch 1, wobei der erste und der zweite Stab im Wesentlichen von zueinander gleicher Länge sind.

6. Katzenkratzer-Anlockvorrichtung nach Anspruch 5, wobei die Lockmittel, die durch den ersten und den zweiten Stab getragen werden, im Wesentlichen von zueinander gleichem Gewicht sind.

## Revendications

1. Dispositif attractif pour grattoir pour chat (10), comprenant un boîtier cylindrique à extension sensiblement verticale (12) comportant un axe à agencement central (26), ledit boîtier comportant une surface externe supportant un grattoir pour chat et un capuchon (25) positionné sur ledit boîtier, ayant un centre géométrique (29) coextensif avec ledit axe à agencement central (26), une broche rotative (17) positionnée sur ledit capuchon (25) et dudit axe à agencement central (26), des première et deuxième baguettes (13, 14) comportant chacune des première et deuxième extrémités, la première extrémité de chaque baguette étant fixée sur ladite broche et la deuxième extrémité de chaque baguette supportant un dispositif attractif (21, 22), lesdites baguettes étant positionnées sur des côtés diamétralement opposés de ladite broche, de sorte qu'une force latérale appliquée à la baguette ou au dispositif attractif entraîne la rotation des deux baguettes, ensemble avec ladite broche, autour dudit axe à agencement central, ledit grattoir pour chat étant **caractérisé en ce que** lesdites première et deuxième baguettes peuvent être retirées sélectivement de ladite broche rotative, et étant **caractérisé en outre en ce qu'**il comprend une pluralité de paires de première et deuxième baguettes parmi lesquelles un propriétaire d'un animal domestique peut faire une sélection, chaque dite paire ayant une rigidité respective différente en vue de définir les arcs de courbure qui y sont imposés par le poids des dispositifs attractifs (21, 22).

2. Dispositif attractif pour grattoir pour chat selon la revendication 1, dans lequel ledit boîtier cylindrique est fixé sur une plate-forme à extension sensiblement horizontale (11) et est supporté par celle-ci.

3. Dispositif attractif pour grattoir pour chat selon la revendication 2, dans lequel ladite plate-forme à extension horizontale est au moins en partie recouverte par une surface de grattage pour chat.

4. Dispositif attractif pour grattoir pour chat selon la revendication 1, dans lequel lesdits dispositifs attractifs peuvent être retirés sélectivement desdites baguettes.

5. Dispositif d'attraction pour grattoir pour chat selon la revendication 1, dans lequel lesdites première et deuxième baguettes ont une longueur sensiblement égale l'une par rapport à l'autre.

6. Dispositif d'attraction pour grattoir pour chat selon la revendication 5, dans lequel les dispositifs attractifs supportés par lesdites première et deuxième baguettes ont sensiblement un poids égal l'un par rapport à l'autre.
